# EUROPEAN PATENT APPLICATION

(11) **EP 0 986 223 A2**
(43) Date of publication of application: **15.03.2000**
(21) Application number: 99115176.2
(22) Date of filing: 11.08.1999
(51) Int. Cl.: H04L 12/58

(54) **Internet message waiting signal**

(30) Priority: 04.09.1998 AU PP569698
(71) Applicant: ALCATEL, 75008 Paris (FR)
(72) Inventor: Bridger, Richard, Glebe 2037, New South Wales (AU)
(74) Representative: Dreiss, Fuhlendorf, Steimle & Becker, Patentanwälte

(57) **Abstract**

A subscriber having a PC1 and a telephone 2 is connected to a just Internet Service Provider 4 in the internet network 3, and to a telephone exchange 12 in the telephone network. When a second internet user 10 sends an e-mail message to the address of PC1 it is stored by ISP4 in a mailbox 5 allocated to the PC1. Mailbox monitoring means 6 detects the presence of a message in mailbox 5 and mail notifier 7 transmits a message from the internet to the telephone network which modifies the user profile 14 to signal to the user via the telephone 2 that an internet message is waiting, eg, by a distinctive dial tone, or by lighting a LED on the phone. In this way the user can be alerted to the presence of mail in the mailbox without having to log on to the PC1.

## Description

### Technical Field

This invention relates to a technique for advising an Internet user of the presence of a message. In particular, the invention will be described in terms of an e-mail message waiting signal.

### Background Art

At present many domestic e-mail users do not have a PC permanently connected to the phone line and it is necessary for them to log on to their Internet Service Provider (ISP) to check for incoming e-mail. The process of logging in takes about five minutes to start up the PC, dial in to the ISP, start the browser software and check the mail-box. There are the usual charges for dial-up ( usually a local call charge), plus the ISP access time charge, and frequently there may not be any e-mail messages waiting.

These factors tend to discourage e-mail users who do not have a continuous e-mail connection from frequently checking their message waiting box. In turn this reduces a major advantage of e-mail, the immediacy of the communication.

Users with permanent connections, such as businesses with PC's continuously connected to LAN's permanently connected to the Internet, do not have this problem because e-mail applications such as Lotus Notes ™ alert users when messages are waiting.

### Disclosure of the Invention

This specification discloses a method and arrangement for alerting users to the presence of an e-mail message in their mail box, eliminating the need for the user to log-on to check for the presence of incoming message.

Accordingly there is described an arrangement for alerting a user to the presence of a waiting message, including: mailbox monitor means to monitor the user's mailbox and to transmit a message to the telephone Network Management System (NMS) to cause a message waiting signal to be applied to the user's telephone line depending on the status of the contents of the mailbox.

In one embodiment the network management system applies a distinctive dial-tone to the user's telephone line, so the user need only lift the handset to find out if an e-mail message is waiting.

In an alternative embodiment the NMS sends a signal to the user's telephone to activate a message waiting light on the telephone.

In a further embodiment the NMS applies a recorded voice announcement when the user lifts the handset.

In another embodiment, the NMS sends a display message to be displayed on the display of the user's telephone, advising of the presence of a message in the mailbox.

In yet another embodiment, a distinctive ring is used to alert the user of the presence of a message.

In a preferred embodiment the invention provides an arrangement for alerting a user of a stored data message,
the arrangement including :
at the user's premises:
   - a telephone subset and a data apparatus both connectable to the user's telephone line;
at the telephone network end of the user's telephone line:
   - line signalling means to selectively apply a data message waiting signal to the user's telephone line;
   - the data service point providing an interface between the user's data apparatus and a data network;
   - the data service point including message storage means allocated to the user,
   - and message detector means to detect a change in the contents of the message storage means,
   - wherein the message detector means transmits a signal to the line signalling means indicating a change in the contents of the message storage means to control the application of the message waiting signal to the user's telephone line.

### Brief Description of the Drawings

The invention will be described with reference to the accompanying drawings, in which:

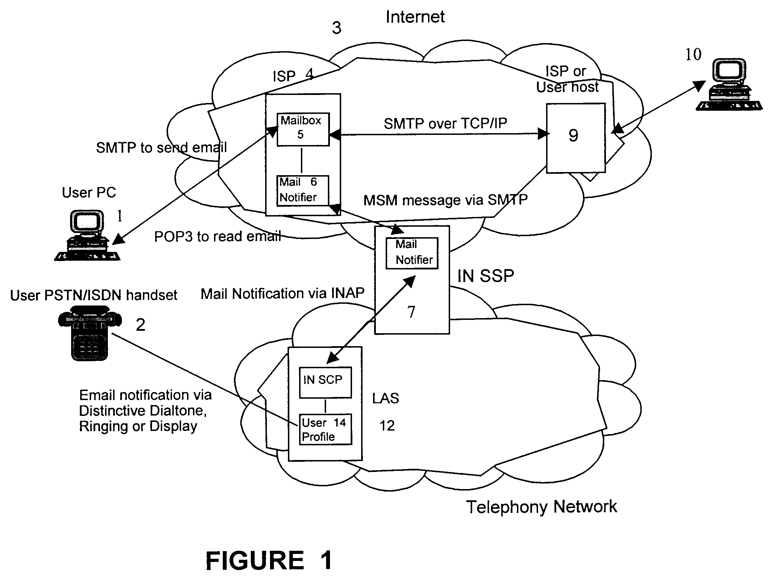

Figure 1 represents the user's PC and telephone connected to the Internet and Telephone network respectively.

### Best Mode of Carrying out the Invention

With reference to Figure 1 a first user's PC 1 is shown illustratively connected to an ISP mailbox 5 a first ISP4 via the Internet 3. It is, of course, understood that the PC1 connects into the Internet via the user's telephone line and the telephone network. The following abbreviations are used in the drawing:
INAP Intelligent Network Access Protocol
IN SSP Intelligent Network Service Switching Point
INSCP Intelligent Network Service Control Point
LAS Local Access Switch (Local Exchange)

Mailbox monitor 6 monitors the user's mailbox 5. When another user at PC 10 sends an e-mail message to the first user via second ISP9, the message is stored in the first user's mailbox 5 at ISP 4. The mailbox monitor 6 detects the presence of the message in mailbox 5 and when the status of the mailbox 5 changes from "empty" to "not empty", monitor 6 advises the network management system 7 that there is a message waiting and also the details necessary to associate this with the user's telephone line number.

The NMS 7 then notifies the exchange 12 to which the first user's phone line is connected to alter the User profile 14 of the first user so that a message waiting signal is applied to the first user's phone line.

Depending on the option chosen the message waiting signal may be, for example:
distinctive dial-tone;
message waiting light;
RVA;
message waiting display;
distinctive ring signal.
The mailbox status messaging mechanism concerns the notification to a network management system of changes in the status of subscribed users' mailboxes from empty to not empty and vice versa.

E-mail which is carried over the Internet distinct from e-mail over proprietary networks, is based on a number of Internet standards called RFCs (Request For Comment). The following main standards are applicable:

Simple Mail Transfer Protocol (SMTP : RFC-821) defines the protocol for the transfer of e-mail messages between a sending Internet host computer (such as the user's client PC when connected to their ISP server, or the ISP host itself when communicating with a destination SMTP server). SMTP handles the addressing of the destination(s), normally by Internet Domain Name System (DNS) addresses such as user@company.com. The SMTP protocol is based on a request-response messaging structure to enable the contents of the e-mail to be transmitted to the destination SMTP server and acknowledged.

RFC-822 defines the format of e-mail text messages and various Multipurpose Internet Mail Extension (MIME) standards (RFC-1521 etc.) Define the format of extension and non-text based messages.

RFC-1123 defines the requirements for an Internet host computer in terms of the e-mail and other protocols it should support.

Post Office Protocol (POP3 : RFC-1939). Since users are not always on-line, e-mail received via SMTP by a destination ISP is stored in a mailbox. The POP3 protocol defines how a user can interrogate their mailbox and download or delete messages.

Internet Message Access Protocol (IMAP : Internet Draft). This is a more modern version of POP3 which allows users to access their mailbox from different host computers.

It should be observed that these standards are separated into two areas: "from the Internet to the ISP" and "from the user to the ISP". Thus the protocols do not easily support the facility to notify an external management system that a message has arrived in a user's mailbox. It would be possible to use SMTP to address an e-mail message to both the user and a network management system, but this would require the sender to be aware of the need for this and also give the text of the e-mail message to the network management system. Similarly, it would possible for a network management system to log-in to the ISP and query the users mailbox, but this would require the network management system to know the user's password. Both of these options are unacceptable.

Instead the ISP e-mail software package is modified to monitor the user's mailbox size and generate e-mail messages to the network management system when this status changes to empty or not empty. This Mailbox Status Message (MSM) is proposed to have the following characteristics (in modified BNF).
Mailbox Status Message ::= 〈Sender〉〈Destination〉〈Heading〉〈Body〉
〈Sender〉::= DNS address of ISP
〈Destination〉 ::=DNS address of network management system
〈Heading〉::=MSM〈sequence〉
〈Sequence〉::=1...n (circular, n= to be defined)
〈Body〉::={〈MSM field〉.〈CRLF〉}
〈MSM field〉::=〈DNS address of user〉〈No.of e-mails〉
〈No. of e-mails〉=0,1....n

Thus Mailbox Status messages are addressed to the network system handling the e-mail notification for the subscribed users. Messages are sequenced for verification purposes. Missing messages would normally be handled by the TCP/IP and SMTP protocols. Messages can be generated on a timed basis, containing multiple〈MSM fields〉 (to give a lower traffic) or individually (to give the fastest notification). The MSM messages need contain no private information regarding the sender, subject or contents of the e-mail being reported (although see below for the use of sender and/or subject information):

Example MSM message:
From:isp.org.au
To:nmc.org.au
Subject:MSM_000001034
user1@isp1.org.au 1
user2@company.com 0
user3@isp2.com 24

The generation of MSM messages are implemented in the ISP software which handles the e-mail (the Mail Notifier function). The following factors are relevant:
- only a limited number of these e-mail packages exist, SendMail being the most common
- most packages run on either Unix or Windows NT, which are process-based. Mail Notifier function would be a new process.
- the vendors of these packages are used to following changes and extensions in the Internet base protocols.

In one embodiment it is proposed to indicate the number of messages in each mailbox, various alternatives may be considered.
- MSM messages are only sent when the status of a mailbox changes from empty to not-empty or vice-versa
- MSM messages are sent whenever the number of messages in a mailbox increments or goes to zero.
- MSM messages are sent at various thresholds, eg. every additional 5 messages or return to zero.

A further option is to display or announce the number of messages to the user. A further refinement is to send the sender and/or subject of the e-mail messages and display this to the user. This would be useful to indicate junk e-mail messages.

E-mail Directory number mapping can be carried out in any network management system which can be informed by an operator of the E164 Directory Number (DN) to be used to notify the status of e-mail for a user identified by a DNS address. It is proposed that this network management system be under the control of the Telco which is responsible for the PSTN and ISDN lines used to send the notification to the user. It is further proposed that this network management system be based on an Intelligent Network (IN) system, for the following reasons:
- an IN is inherently more secure than the Internet since only directly connected operators can normally access it rather than any potential Internet user for an Internet-based system. This would allow for the more secure verification of DNs to be carried out.
- IN is well suited for control of the existing telephony network the DN-DNS number translation to be performed is essentially network-wide in context, and is thus better suited to an IN than a local exchange network management system

The DN-DNS mapping system is based on an IN Service Switching Point (SSP) and performs the following functions:
a) maintain a database of DNS->DN mappings for users which subscribed to the e-mail notification service. A single DNS to map to multiple DN numbers.
b) be able to handle user-requested changes to DN and DNS numbers and their mappings via e-mail or phone while verifying these as far as possible (eg a user could only specify a DN if subscribing to or ringing from that DN, a user could only request a changed DNS if sending an e-mail from the old or new DNS).
c) support an e-mail system that is able to receive and acknowledge (using SMTP) MSM messages from ISPs. Most IN systems are based on Unix or Windows NT and many such e-mail packages are available for these platforms.
d) control the local exchanges in the telephony network (acting as IN Service Control Points or SCPs) to indicate to the users via their PSTN or ISDN lines the status of their mail boxes. It is proposed that this control be handled by INAP messages, possibly using an extension of the existing voice message waiting INAP messages.

The database lookup for a DN in responds to a received MSM message and generates of one or more INAP message sequences using software on the IN platform.

The INAP E-mail Notification messages are routed to SCPs co-located or able to control the local exchanges for the indicated DNs. These exchanges then (giving an example for the Alcatel A1000 S12) set a flag in the subscriber profile to indicate "E-mail waiting" or "no E-mail".

As described above, there are several possible ways of using a PSTN or ISDN handset to indicate the status of a users mail box in response to the setting of the E-mail notification flag described above. These may be grouped into reactive and proactive indications:

### Reactive E-mail Notification

This indication relies on the user performing an action in order to provide an indication of E-mail waiting/no E-mail waiting.
a) Distinctive Dial Tone Indication: the A1000 S12 is able to give a PSTN or ISDN subscriber distinctive dial tone (DDT) to indicate certain conditions such as voice message waiting or call forwarding access. This DDT is applied when the subscriber goes off-hook (ie reactive). The dial tone can be applied from the DIAM which allows any digital waveform to be given and it is proposed to use a voice recorded announcement to indicate the presence of E-mail in the user's mailbox thus: 〈dialtone〉"you have E-mail"〈dialtone〉. The absence of E-mail would be indicated by only 〈dialtone〉. Alternatively the dialtone supplied could be distinctive, and thus the E-mail notification service could work in conjunction with existing distinctive dialtone services.

### Proactive E-mail Notification

These indications do not rely on the user performing an action to indicate the presence of E-mail, other than noticing the indication:
a) Distinctive Ringing (DR): this is used by the A1000 S12 in services such as selective ringing to indicate a call from a number on a selective list by a distinctive ringing tone. A new distinctive ringing tone would be specified for E-mail waiting. There are two possible ways of using this distinctive ringing, which could be specified as a subscription option:
   Distinctive ringing on normal incoming calls: when the subscriber receives any incoming call and the E-mail waiting flag is set DR is applied.
   Distinctive Ringing + RVA Notification: the IN would trigger a call to the subscriber with DR when an E-mail notification message was received. If the user answered (personally or an answering machine) an RVA would be sent to indicate "E-mail waiting".
b) Message Waiting Indicator: certain special handsets are equipped with a message waiting indicator light. This is triggered by a Frequency Shift Keying signal over the subscriber loop. The same indication could be used to indicate E-mail waiting.
c) ISDN Display Indication: it would be possible to indicate the presence of a waiting E-mail by a text message on the ISDN handset sent via D-channel signalling. As a future development, it could be possible to display the sender, subject or text itself of an E-mail on the ISDN handset under subscriber control.

## Claims

1. An arrangement for alerting a user to the presence of a waiting message, including: mailbox monitor means to monitor the users mailbox and to transmit a message to the telephone network to cause a message waiting signal to be applied to the user's telephone line depending on the status of the contents of the mailbox.

2. An arrangement as claimed in claim 1 wherein distinctive dial tone is applied to the user's telephone line by the user's telephone exchange.

3. An arrangement as claimed in claim 1 wherein the user's telephone exchange sends a signal to the user's telephone to activate a message waiting light on the telephone.

4. An arrangement as claimed in claim 1 or claim 2 wherein the user's exchange applies a recorded voice announcement to the user's line to advise of a waiting message.

5. An arrangement as claimed in any one of claims of claims 1, 2 or 4 wherein the exchange applies a distinctive ring to the user's line.

6. An arrangement for alerting a user of a stored data message,
the arrangement including :
at the user's premises;
- a telephone subset and a data apparatus both connectable to the user's telephone line;
at the telephone network end of the user's telephone line
- line signalling means to selectively apply a data message waiting signal to the user's telephone line;
- the data service point providing an interface between the user's data apparatus and a data network;
- the data service point including message storage means allocated to the user,
- and message detector means to detect a change in the contents of the message storage means,
- wherein the message detector means transmits a signal to the line signalling means indicating a change in the contents of the message storage means to control the application of the message waiting signal to the user's telephone line.

7. An arrangement as claimed in claim 6 wherein the data network is an e-mail network.

8. An arrangement as claimed in claim 6 wherein the data network is the internet.

9. An arrangement as claimed in any one of claims 6 to 8 wherein the user's data apparatus is connected to the data service point via the telephone network.

10. An arrangement as claimed in any one of claims 1 to 8 wherein the message is an e-mail message.

11. An arrangement for alerting a user to the presence of a waiting message as herein described with reference to the accompanying drawing.
